# EUROPÄISCHE PATENTANMELDUNG

(11) **EP 2 458 399 A1**
(43) Veröffentlichungstag der Anmeldung: **30.05.2012**
(21) Anmeldenummer: 10192730.9
(22) Anmeldetag: 26.11.2010
(51) Int. Cl.: G01S 5/00, G01S 19/14, G01S 19/34, G06Q 10/00

(54) **Verfahren zum Detektieren und Ausgeben der aktuellen Position eines Gegenstands**

(71) Anmelder: Siemens IT Solutions and Services GmbH, 1210 Wien (AT)
(72) Erfinder: Graf, Gerhard, 2542 Kottingbrunn (AT)
(74) Vertreter: Patentanwaltskanzlei WILHELM & BECK

(57) **Zusammenfassung**

Die Erfindung betrifft ein Verfahren zum Detektieren und Ausgeben der aktuellen Position eines Gegenstands (G), bei dem satellitengestützte Ortungssignale ((S1,..., Sn) empfangen und daraus aktuelle Positionsdaten (K1,...,Km) ermittelt werden, und die aktuellen gespeicherten Positionsdaten (K1,...,Km) durch Aussenden von Funksignalen (F1) ausgegeben werden, wobei das Aussenden von Funksignalen (F1) unterbrochen wird, sobald der Empfang der satellitengestützten Ortungssignale (S1,..., Sn) unterbrochen ist. Vorteilhaft kann verhindert werden, dass unerwünschte Funksignale im Frachtraum von Flugzeugen ausgesandt werden.

## Beschreibung

Die Erfindung betrifft ein Verfahren zum Detektieren und Ausgeben der aktuellen Position eines Gegenstands und eine Vorrichtung zum Durchführen des Verfahrens und ein Programmprodukt, mit dem das Verfahren ausführbar ist.

Aus "fugon telematic - NavKoS P-60, NavKoS P-160 - Technische Daten" ist ein Monitor-System zur Überwachung des Standortes von Booten und zur Alarmierung bei unerlaubter Benutzung bzw. Diebstahl mit Hilfe eines GPS/GSM-Bordrechners bekannt. Dabei wird die aktuelle Position über GPS Koordinaten ermittelt und über GSM-GPRS versendet.

Um beispielsweise Gepäck per GPS-Koordinaten auffindbar zu machen, muss es ein Gerät beinhalten, das GPS-Koordinaten empfangen und diese per GSM an eine definierte Stelle melden kann. In Flugzeugen dürfen aber ab der Startphase keine elektronisch strahlenden Geräte mehr eingeschaltet sein.

Im Flugzeug müssen alle strahlenden Quellen nach Aufforderung manuell ausgeschaltet werden. Der Benutzer könnte das strahlende Gerät selber ausschalten. Das kann vergessen werden. Im Gepäckstück vorhandene Geräte können im Frachtraum per Hand nicht mehr ausgeschaltet werden, wenn dies vergessen wurde. Ein zuverlässiges Ausschalten ist nicht möglich.

GPS Tracking gibt es bereits, jedoch keine im Flugzeug erlaubte Variante, die die Position sendet.

Die Aufgabe der Erfindung besteht somit darin, ein Verfahren und eine Vorrichtung zur Ermittlung der Position eines Gegenstands zur Verfügung zu stellen, die auch in einem Flugzeug einsetzbar ist.

Die Aufgabe der Erfindung wird gelöst durch die unabhängigen Patentansprüche.

Vorteilhafte Weiterbildungen und Ausgestaltungen der Erfindung sind in den abhängigen Ansprüchen angegeben.

Das Gerät darf während des Fluges nicht senden. Vor bzw. nach dem Flug muss es jedoch senden können, um den aktuellen Standort wieder mitteilen zu können. Das Abschalten und Wiederanschalten des Sendens des Geräts wird automatisiert durchgeführt. Im Frachtraum des Flugzeuges wird das Senden des Geräts automatisch ausgeschaltet und nach dem Ausladen wieder eingeschaltet.

Üblicherweise kann dass das Gerät im Frachtraum aufgrund der Abschirmung durch die metallische Hülle des Flugzeugs keine GPS-Koordinaten empfangen. Die GPS-Koordinaten werden permanent aufgezeichnet. Nachdem diese Koordinaten in einem bestimmten Zeitraum nicht mehr empfangen werden, wird das sendende Modul abgeschaltet bzw. in Flugmodus gesetzt. Nach Empfang von GPS-Koordinaten - neue Koordinaten - wird wieder eingeschaltet. Das GPS-Modul ist nur ein Empfänger zum Empfang von GPS-Koordinaten, strahlt daher keine Funkwellen aus und muss daher nicht ausgeschaltet werden.

Damit wird eine Bedingung von der Luftfahrt-Industrie automatisch erfüllt, die elektronisch strahlende Geräte während eines Fluges verbietet. Durch das Aufzeichnen der GPS-Koordinaten können ein Bewegungsprofil erstellt und der letzte Standort ermittelt werden. Der Akku des Gerätes wird wesentlich entlastet durch das Ausschalten eines sendenden Moduls während der Flugzeit, die mehrere Stunden betragen kann. Bei einer in der Regel maximal einige Tage dauernden Reisedauer eines Gepäckstücks kann dessen Aufenthaltsdauer im Flugzeug einen beträchtlichen Anteil an Reisezeit betragen, beispielsweise zwischen 20% und 70%, wodurch durch Abschalten des Geräts die Laufzeit des Akkus entsprechend verlängert wird.

Es wird ein Verfahren zum Detektieren und Mitteilen der aktuellen Position eines Gegenstands mit folgenden Verfahrensschritten vorgestellt:
a) Empfangen von satellitengestützten Ortungssignalen und Ermitteln der aktuellen Positionsdaten aus den Ortungssignalen,
b) Zwischenspeichern der aktuellen Positionsdaten,
c) Ausgeben der aktuellen Positionsdaten durch Aussenden von Funksignalen,
d) Unterbrechen des Aussendens von Funksignalen, sobald der Empfang der satellitengestützten Ortungssignale unterbrochen ist,
e) Empfangen von satellitengestützten Ortungssignalen und Ermitteln der aktuellen Positionsdaten aus den Ortungssignalen, sobald der Empfang der satellitengestützten Ortungssignale verfügbar ist,
f) Zwischenspeichern der aktuellen Positionsdaten,
g) Ausgeben der aktuellen Positionsdaten durch Wiederaussenden von Funksignalen.

Bevorzugt ist die Verfügbarkeit des Empfangs der satellitengestützten Ortungssignale indirekt dadurch erkennbar, dass sich die zwischengespeicherten Positionsdaten ändern. Dadurch ist keine weitere Kommunikation zwischen dem GPS-Empfangssystem und dem funkgestützten Mobilfunkteil erforderlich.

Bevorzugt wird das Aussenden von Funksignalen unterbrochen, sobald der Empfang der satellitengestützten Ortungssignale für eine vorgegebene Mindestzeit unterbrochen ist. Dadurch wird verhindert, dass kurze GPS-Empfangsaussetzer (z.B. durch Hochhäuser) zum Abschalten des Sendeteils führen.

Bevorzugt wird das Empfangen der satellitengestützten Ortungssignale durch ein Ortungs-Empfangsgerät durchgeführt, beispielsweise auf Basis von GPS- oder Galileo-Satellitensignalen und das Aussenden der Funksignale durch ein funkgestütztes Mobilfunkgerät, beispielsweise auf Basis des GSM, GPRS, UMTS und/oder TETRA-Systems.

Bevorzugt enthält der Gegenstand das Ortungs-Empfangsgerät (GPS, Galileo) und das funkgestützte Mobilfunkgerät (GSM, GPRS, UMTS) und ist als Koffer, Reisegepäck und/oder Kraftfahrzeug ausgebildet.

Bevorzugt sind das Ortungs-Empfangsgerät und das funkgestützte Mobilfunkgerät als ein kompaktes, integrales Gerät ausgebildet, das in oder an der Vorrichtung einbringbar bzw. befestigbar ist. Dadurch ist es dem Reisenden möglich, die Position seines Koffers während der gesamten Reise durch einfaches Einpacken des Geräts in den Koffer nachvollziehbar zu machen.

In der Regel ist eine Empfangseinheit, beispielsweise eine Mobilfunk-Basisstation, am Reiseort verfügbar, die mit dem funkgestützten Mobilfunkgerät über Funksignale kommuniziert. Die Positionsdaten werden von der Basisstation an eine Datenbank oder einen Server zur weiteren Verarbeitung weitergeleitet, wobei die Positionsdaten durch eine Reiseversicherung oder den Besitzer des Gegenstands online verfügbar gemacht werden können. Somit ist bei einem Verlust des Gepäckstücks innerhalb weniger Sekunden dessen Position weltweit feststellbar, da die eingesetzten Mobilfunkstandards GSM, GPRS üblicherweise weltweit zumindest an Flughäfen verfügbar sind.

Bevorzugt wird das Verfahren in einem satellitengestützten Ortungs-Empfangsgerät (GPS, Galileo) und einem funkgestützten Mobilfunkgerät (GSM, GPRS, UMTS) ausgeführt.

Der Programmcode zur Ausführung des Verfahrens ist bevorzugt von einem Server oder einem Internetprovider downloadbar. Dadurch besteht die Möglichkeit, das eigene GPS-fähige Mobilfunkgerät mit der Software beispielsweise APP oder Applet auszurüsten und einfach in den Reisekoffer zu legen oder die Software zu aktualisieren.

Ausführungsbeispiele und Weiterbildungen der Erfindung sind in den folgenden Figuren dargestellt. Es zeigen:
- Figur 1:: Ein System, in dem das Verfahren nach Figur 2 ausführbar ist.
- Figur 2:: Ein Flussdiagramm eines Verfahrens zum Detektieren und Ausgeben der aktuellen Position eines Gegenstands.

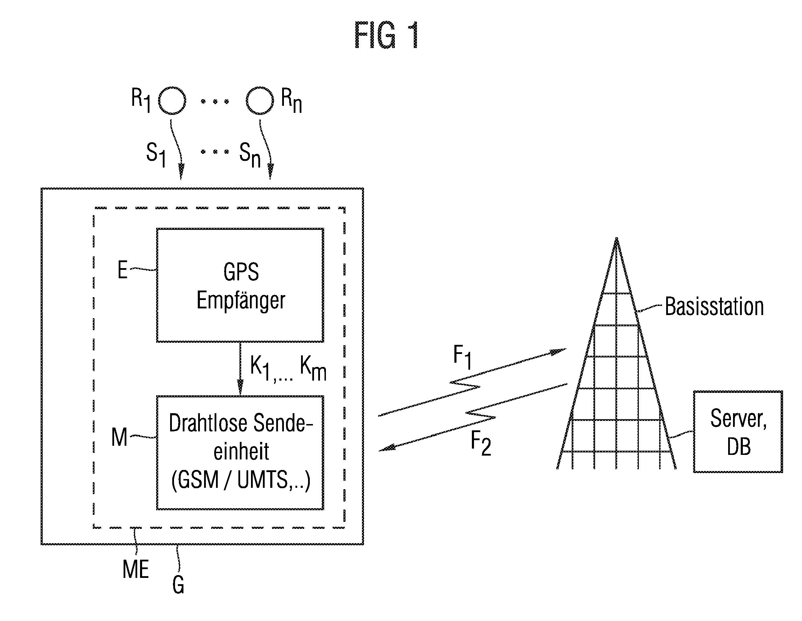

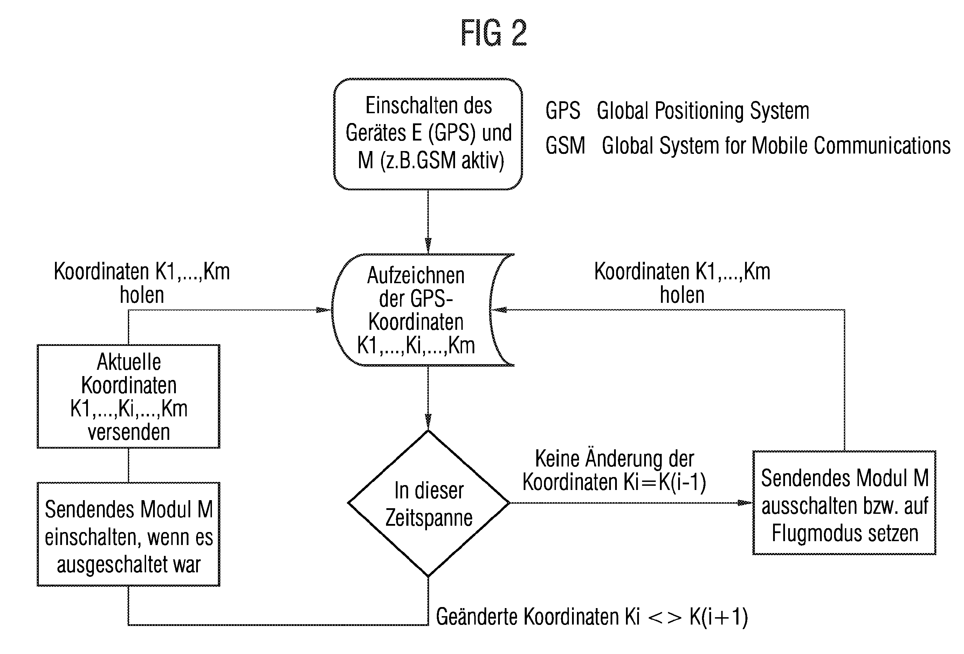

Figur 1 zeigt ein System, in dem ein Verfahren zum Detektieren und Ausgeben der aktuellen Position eines Gegenstands G ausführbar ist. Es ist ein GPS-Empfänger E zum Empfangen von GPS Satellitensignalen S1,..,Sn, vorgesehen, die von den GPS-Satelliten R1,...,Rn ausgesendet werden. Der GPS-Empfänger E ermittelt die aktuellen Positionsdaten K1, in Figur 2 auch "Koordinaten" genannt, und gibt diese an eine drahtlose Sendeeinheit M, im Folgenden "funkgestütztes Mobilfunkgerät M" genannt, weiter, die auf Basis der Funkstandards GSM, GPRS, UMTS oder TETRA arbeitet (Figur 2: "Einschalten des Geräts GPS GSM aktiv"). Die aktuellen Positionsdaten Ki werden bevorzugt im funkgestützten Mobilfunkgerät M zwischengespeichert (Figur 2: "Aufzeichnen der GPS-Koordinaten K1,...,Km"). Der GPS-Empfänger E und das Mobilfunkgerät M sind als kompaktes, integrales Gerät ME ausgebildet, das in oder an dem Gegenstand G, beispielsweise einem Reisegepäckstück, einbringbar bzw. befestigbar ist. Die aktuellen Positionsdaten K1 werden durch Aussenden von Funksignalen F1 an eine Basisstation B weitergegeben, die mit dem funkgestützten Mobilfunkgerät M über Funksignale F1, F2 kommuniziert (Figur 2: "Aktuelle Koordinaten K1,...,Km versenden"). Die Positionsdaten K1 werden an eine Datenbank DB oder einen Server zur weiteren Verarbeitung weitergeleitet. Beispielsweise können die Positionsdaten K1, ..., Ki, ..., Km des Gegenstands G einer Reiseversicherung oder dem Besitzer des Gegenstands G online verfügbar gemacht werden.

Sobald der Empfang der satellitengestützten Ortungssignale S1,..., Sn unterbrochen ist, bedeutet dies, dass sich das Gerät ME im Frachtraum eines Flugzeugs befinden kann, in dem das Aussenden von Funksignalen F1 nicht erlaubt ist. Alternativ könnte sich das Gepäckstück in einem Tunnel oder einem Gebäude befinden, in dem kein GPS-Empfang möglich ist. In Figur 2 wird das Kriterium "Empfang der satellitengestützten Ortungssignale S1,...,Sn unterbrochen" beispielhaft durch über eine gewisse Zeitspanne ("In dieser Zeitspanne") unveränderte Koordinaten ("Keine Änderung der Koordinaten Ki=k(i+1)") erkannt. Somit wird das Aussenden des Funksignals F1 vom Mobilfunkgerät M unterbrochen (Figur 2: "Sendendes Modul M ausschalten..."), bis der Empfang der satellitengestützten Ortungssignale S1,...,Sn wieder verfügbar ist (Kriterium Figur 2: "Geänderte Koordinaten Ki<>K(i+1)", "in dieser Zeitspanne", "Sendendes Modul M einschalten,..."). Danach werden die aktuellen Positionsdaten K1,...,Ki,...,Km über Funksignale F1 durch das Mobilfunkgerät M ausgegeben (Figur 2: "Aktuelle Koordinaten K1,...,Km versenden")und zwischengespeichert (Figur 2: "Aufzeichnen der GPS-Koordinaten").

## Patentansprüche

1. Verfahren zum Detektieren und Ausgeben der aktuellen Position eines Gegenstands (G) mit folgenden Verfahrensschritten:
a) Empfangen von satellitengestützten Ortungssignalen ((S1,..., Sn) und Ermitteln der aktuellen Positionsdaten (K1,...Ki,...,Km) aus den Ortungssignalen (S1,..., Sn),
b) Zwischenspeichern der aktuellen Positionsdaten (K1,...,Km),
c) Ausgeben der aktuellen Positionsdaten (K1, ..., Ki, ..., Km) durch Aussenden von Funksignalen (F1),
d) Unterbrechen des Aussendens von Funksignalen (F1), sobald der Empfang der satellitengestützten Ortungssignale (S1,..., Sn) unterbrochen ist,
e) Empfangen von satellitengestützten Ortungssignalen (S1,...,Sn) und Ermitteln der aktuellen Positionsdaten (K1,...,Ki,...,Km) aus den Ortungssignalen (S1,..., Sn), sobald der Empfang der satellitengestützten Ortungssignale (S1,..., Sn) verfügbar ist,
f) Zwischenspeichern der aktuellen Positionsdaten (K1, ..., Ki,..., Km),
g) Ausgeben der aktuellen Positionsdaten (K1, ..., Ki..., Km) durch Wiederaussenden von Funksignalen (F1).

2. Verfahren nach Anspruch 1, **dadurch gekennzeichnet, dass** auf Verfügbarkeit des Empfangs der satellitengestützten Ortungssignale (S1,..., Sn) erkannt wird, wenn sich die zwischengespeicherten Positionsdaten (K1,...,Kn) ändern.

3. Verfahren nach Anspruch 1 oder 2, **dadurch gekennzeichnet, dass** das Aussenden von Funksignalen (F1) unterbrochen wird, sobald der Empfang der satellitengestützten Ortungssignale (S1,..., Sn) für eine vorgegebene Mindestzeit (t) unterbrochen ist.

4. Verfahren nach einem der vorherigen Ansprüche, **dadurch gekennzeichnet, dass** das Empfangen der satellitengestützten Ortungssignale ((S1,..., Sn) durch ein Ortungs-Empfangsgerät (GPS, Galileo) und das Aussenden der Funksignale (F1) durch ein funkgestütztes Mobilfunkgerät (GSM, GPRS, UMTS, TETRA) durchgeführt werden.

5. Verfahren nach einem der vorherigen Ansprüche, **dadurch gekennzeichnet, dass** der Gegenstand (G) das Ortungs-Empfangsgerät (GPS, Galileo) und das funkgestützte Mobilfunkgerät (GSM, GPRS, UMTS) aufweist und vorzugsweise als Koffer und/oder Kraftfahrzeug ausgebildet ist.

6. Verfahren nach einem der vorherigen Ansprüche, **dadurch gekennzeichnet, dass** das Ortungs-Empfangsgerät (GPS, Galileo) und das funkgestützte Mobilfunkgerät (GSM, GPRS, UMTS, TETRA) ein integriertes, kompaktes Gerät (ME) bilden, das in den Gegenstand (G) einlegbar und/oder an dem Gegenstand (G) befestigbar ist.

7. Verfahren nach einem der vorherigen Ansprüche, **dadurch gekennzeichnet, dass** eine Empfangseinheit (Basisstation B) verfügbar ist, die mit dem funkgestützten Mobilfunkgerät über Funksignale (F1,F2) kommuniziert, und die die Positionsdaten (K1,...,Kn) an eine Datenbank (DB) oder einen Server zur weiteren Verarbeitung weiterleitet, wobei die Positionsdaten durch eine Reiseversicherung oder den Besitzer des Gegenstands (G) online verfügbar gemacht werden können.

8. Vorrichtung mit einem satellitengestützten Ortungs-Empfangsgerät (GPS, Galileo) und einem funkgestütztem Mobilfunkgerät (GSM, GPRS, UMTS), mit dem ein Verfahren nach einem der vorherigen Ansprüche ausführbar ist oder ausgeführt wird.

9. Programmprodukt, aufweisend einen Programmcode, in dem das Verfahren nach einem der Verfahrensansprüche 1 bis 7 ausführbar ist.

10. Programmprodukt nach Anspruch 9, **dadurch gekennzeichnet, dass** der Programmcode beispielsweise als APP von einem Server oder einem Internetprovider downloadbar ist.
